# EUROPÄISCHE PATENTSCHRIFT

(11) **EP 1 922 289 B1**
(45) Veröffentlichungstag und Bekanntmachung des Hinweises auf die Patenterteilung: **27.02.2013**
(21) Anmeldenummer: 06793162.6
(22) Anmeldetag: 04.09.2006
(51) Int. Cl.: C01B 33/027, C01B 33/029, C01B 33/03

(54) **VERFAHREN UND VORRICHTUNG ZUR HERSTELLUNG VON GRANULATFÖRMIGEM POLYKRISTALLINEM SILICIUM IN EINEM WIRBELSCHICHTREAKTOR**
METHOD AND DEVICE FOR PRODUCING GRANULATED POLYCRYSTALLINE SILICON IN A FLUIDISED-BED REACTOR
PROCEDE ET DISPOSITIF POUR PRODUIRE DU SILICIUM POLYCRISTALLIN EN GRANULES DANS UN REACTEUR A LIT FLUIDISE

(30) Priorität: 08.09.2005 DE 102005042753
(43) Veröffentlichungstag der Anmeldung: 21.05.2008
(73) Patentinhaber: Wacker Chemie AG, 81737 München (DE)
(72) Erfinder: HERTLEIN, Harald, 84489 Burghausen (DE); HAUSWIRTH, Rainer, 84375 Kirchdorf (DE)
(74) Vertreter: Potten, Holger
(86) Internationale Anmeldenummer: PCT/EP2006/065943
(87) Internationale Veröffentlichungsnummer: WO 2007/028776

(56) Entgegenhaltungen:
- EP-A- 1 223 145
- DE-A1- 19 948 395
- JP-A- 6 127 914
- US-A- 5 374 413

## Beschreibung

Die Erfindung betrifft ein Verfahren und eine Vorrichtung zur Herstellung von granulatförmigem polykristallinem Silicium in einem Wirbelschichtreaktor.

Hochreines polykristallines Silicium dient u. a. zur Herstellung von elektronischen Bauteilen und Solarzellen. Es wird durch thermische Zersetzung eines siliciumhaltigen Gases oder eines siliciumhaltigen Gasgemisches gewonnen. Dieser Prozess wird als Abscheidung aus der Dampfphase (CVD, chemical vapor deposition) bezeichnet. In großem Maßstab wird dieser Prozess in so genannten Siemens-Reaktoren realisiert.

In neuester Zeit gibt es zahlreiche Bestrebungen, als Alternative zum diskontinuierlichen Siemensverfahren ein kontinuierliches Wirbelschichtverfahren zu nutzen. Hierbei wird eine Wirbelschicht aus Siliciumpartikeln, in der Regel annähernd kugelförmigen Partikeln mit einem Durchmesser von 200 bis 3000 µm, betrieben. Die Partikel werden auf eine Abscheidetemperatur von bevorzugt 600 - 1100°C erhitzt und ein siliciumhaltiges Gas bzw. Gasgemisch, beispielsweise Trichlorsilan oder ein Trichlorsilan/Wasserstoffgemisch, wird durch die Wirbelschicht geleitet. Dabei scheidet sich elementares Silicium auf allen heißen Oberflächen ab und die Siliciumpartikeln wachsen in der Größe an. Ein solches Verfahren bzw. ein geeigneter Reaktor sind beispielsweise in DE 19948395 A1 beschrieben. Durch den regelmäßigen Abzug von angewachsenen Partikeln und Zugabe kleinerer Partikel als Keimpartikel kann das Verfahren theoretisch kontinuierlich mit allen damit verbundenen Vorteilen betrieben werden. Praktisch kommt es jedoch aufgrund von Siliciumabscheidung an den heißen Reaktorteilen, z. B. der Reaktorwand, Einbauteilen und Düsen, zu einer thermisch - mechanischen Belastung des Reaktors und damit zu Reaktorausfällen wegen Hitzestau an den Reaktoroberflächen. Die Minimierung des Problems der Siliciumabscheidung auf den heißen Reaktoroberflächen ist für eine wirtschaftliche Betriebsweise des Wirbelschichtverfahrens von entscheidender Bedeutung.

In der Anmeldung US 2002/0102850 A1 (Kim) wird ein Verfahren und Apparat zur Vermeidung oder Entfernung von Siliciumabscheidung auf Eduktgasdüsen durch kontinuierliches, diskontinuierliches oder geregeltes Eindosieren von HCl+Inertgas (H₂, N₂, He, Ar) oder Inertgas H₂ beschrieben. Nachteiligerweise steigen bei einer solchen Verfahrensführung die Betriebskosten, da der Umsatz und damit die Reaktor Raum-Zeit Ausbeute bei HCl-Dosierung sinkt. Die Verwendung von electronic-grade HCl benötigt außerdem zusätzliche Reinigungs- und Reinhaltungs-Prozessschritte und ist mit erhöhter Kontaminationsgefahr und höheren Ausgangsmaterialkosten verbunden.

Das Patent DE 4327308 C2 (entspricht US 5,382,412) beschreibt einen Reaktor, in dem Heiz- und Reaktionszone getrennt sind und die Beheizung des Reaktors mit einer Mikrowelle erfolgt. Die Mikrowellenheizung soll eine Wandüberhitzung und damit Wandabscheidung vermeiden, da eine erhöhte Wandtemperatur eine erhöhte Si-Wandabscheidung zur Folge habe. Dies Patent offenbart zudem, dass eine Abscheidung an Wänden bei Temperaturen größer 400°C erfolgt und eine Kühlung der Wand wegen des Energieverlustes unwirtschaftlich ist.

US 4,868,013 (Allen) beschreibt ein Verfahren, bei welchem durch Eindüsung von kaltem Inertgas (z. B. H₂) die Reaktoroberfläche gekühlt wird und dadurch die Wandabscheidung verringert wird.

In EP 0 832 312 B1 bzw. US 2002/0081250 A1 wird ein Verfahren beschrieben, bei dem ein Freiätzen oder teilweises Abätzen des Wandbelags bei Betriebstemperatur oder nahe der Betriebstemperatur des Wirbelschichtreaktors mit einem halogenhaltigen gas-förmigen Ätzmittel, wie Chlorwasserstoff, Chlorgas oder Siliciumtetrachlorid erfolgt. Alle genannten Ätzmittel führen zu einer lokalen Umkehrung der eigentlichen Zielreaktion, verringern so die Raum-Zeit Ausbeute des Reaktors und verringern damit die Wirtschaftlichkeit des Verfahrens.

In DE 3910343 A1 (Union Carbide Corp) wird ein Reaktor beschrieben der eine Wandabscheidung durch eine Reaktordoppelwand verhindert. In den äußeren Ring der Reaktorwand wird nur Fluidisiergas, kein Reaktionsgas, eingedüst. Diese Anmeldung beschreibt das Problem, dass die Reaktorwand eine höhere Temperatur als die Wirbelschicht aufweist und es daher zu einer Siliciumabscheidung an der Wand und daraus resultierend zu einem schlechteren Wärmetransport in den Reaktor kommt. Durch die Doppelwand wird eine Trennung von Heiz- und Reaktionszone erreicht, wobei der Wärmetransport in die Heizzone gut erhalten bleibt.

JP 6 127914 A offenbart ein Verfahren zur Herstellung von granulatförmigem polykristallinen Silicium in einem Wirbelschichtreaktor, wobei die Abscheidung von Silicium an der Oberfläche des Wirbelschichtreaktors dadurch vermindert wird, dass die Silankonzentration an der Oberfläche des Reaktors oder die Temperatur an den Oberflächen des Reaktors reduziert werden.

Der Nachteil aller genannten Lösungen zur Verminderung der Siliciumabscheidung auf der Reaktoroberfläche liegt in den erhöhten Betriebskosten. Bei einer HCl/Inertgas Dosierung sinkt der Umsatz und damit die Reaktor Raum-Zeit Ausbeute, denn die HCl/Inertgas Dosierung wirkt dem eigentlichen Ziel der Siliciumabscheidung entgegen. Außerdem steht im allgemeinen Chlorwasserstoff nicht in der hohen Reinheit, wie die übrigen E-duktgase (Wasserstoff, Chlorsilane) zur Verfügung. Für den Einsatz von Chlorwasserstoff wäre also eine zusätzliche Anlage zur Aufbereitung auf entsprechende Qualität notwendig.
Bei einer Wandkühlung steigt der Energiebedarf des Verfahrens so bedeutend an, dass das Verfahren unwirtschaftlich wird.

Aufgabe der Erfindung war es, ein wirtschaftliches Verfahren zur Herstellung von granulatförmigem polykristallinem Silicium in einem Wirbelschichtreaktor mit einer erhitzten Oberfläche zur Verfügung zu stellen, bei dem die Abscheidung von Silicium an der Oberfläche des Wirbelschichtreaktors vermindert ist.

Die Aufgabe wird gelöst durch ein Verfahren, bei dem in einem Reaktor mit einer heißen Oberfläche ein Reaktionsgas enthaltend eine gasförmige Siliciumverbindung bei einer Reaktionstemperatur von 600 bis 1100°C als Siliciummetall auf Siliciumpartikeln, die mittels eines Fluidisierungsgases in einer Wirbelschicht fluidisiert und auf die Reaktionstemperatur erhitzt sind, abgeschieden wird und die mit dem abgeschiedenen Silicium versehenen Partikel sowie nicht reagiertes Reaktionsgas und Fluidisierungsgas aus dem Reaktor entfernt werden, wobei an der Oberfläche des Reaktors eine Gaszusammensetzung enthaltend 99,5 bis 95 Mol.% Wasserstoff und 0,5 bis 5 Mol.% der gasförmigen Siliciumverbindung vorliegt und die Oberfläche des Reaktors eine Temperatur von 700 bis 1400°C aufweist und diese Temperatur höher liegt als die Temperatur der Siliciumpartikel.

Es zeigte sich völlig überraschend, dass sich durch die Kombination einer hohen Reaktoroberflächentemperatur mit einer Gaszusammensetzung enthaltend 99,5 bis 95 Mol.% Wasserstoff und 0,5 bis 5 Mol.% der gasförmigen Siliciumverbindung an der Reaktoroberfläche ein Reaktionsgleichgewicht einstellen lässt, bei dem eine Abscheidung von Silicium auf die Oberfläche des Reaktors nahezu nicht mehr stattfindet und daher ein kontinuierliche Verfahrensführung möglich und auch bevorzugt ist.

Das erfindungsgemäße Verfahren hat einen niedrigeren Energieverbrauch als die im Stand der Technik beschriebenen Verfahren mit Kühlung der Reaktorwand oder Reaktionsgasdüse. Es besitzt ferner eine erhöhte Raum-Zeit Ausbeute im Vergleich zu den Verfahren des Stands der Technik mit Dosierung von Halogenwasserstoffen. Es ist auch von daher wirtschaftlich interessant.

Bevorzugt liegt an der Oberfläche des Reaktors eine Gaszusammensetzung enthaltend 97 bis 99 Mol.% Wasserstoff und 1 bis 3 Mol.% der gasförmigen Siliciumverbindung vor.

Die Gaszusammensetzung an der Oberfläche des Reaktors kann weitere Verbindungen, wie z. B. Inhaltsstoffe aus dem Abgas des Reaktors, z. B. das Kreisgas, umfassen. Kreisgas ist das Abgas des Reaktors, bei dem alle Komponenten mit einem Siedepunkt höher -60°C vorzugsweise durch Kondensation entfernt wurden.

Bevorzugt beträgt die Temperatur an der Oberfläche des Reaktors 800 bis 1100°C.
Bei dem Fluidisiergas, handelt es sich vorzugsweise um Wasserstoffgas, um Kreisgas oder ein Gemisch dieser Gase.

Beim Reaktionsgas das eine gasförmige Siliciumverbindung enthält, handelt es sich vorzugsweise um ein Monosilan oder um eine Chlorsilanverbindung bzw. um ein Monosilan-Wasserstoff - oder um ein Chlorsilan-Wasserstoff-Gemisch. Besonders bevorzugt handelt es sich um Trichlorsilan oder ein Trichlorsilan-Wasserstoff-Gemisch.

Die Einstellung der lokalen Konzentrationsverhältnisse an der Reaktoroberfläche erfolgt durch eine entsprechende Dosierung der Mengenverhältnisse von Fluidisiergas und Reaktionsgas. Durch ein Eindüsen von Gasgemischen unterschiedlicher Zusammensetzung aus Fluidisiergas und Reaktionsgas kann die lokale Gaszusammensetzung an verschiedenen Stellen im Reaktor jeweils unterschiedlich eingestellt werden. Erfindungsgemäß wird die Gaszusammensetzung im Reaktor dabei durch eine Gasmengenregelung so gesteuert, dass an der Oberfläche des Reaktors eine Gaszusammensetzung enthaltend 99,5 bis 95 Mol.% Wasserstoff und 0,5 bis 5 Mol.% der gasförmigen Siliciumverbindung vorliegt. Im übrigen Reaktionsraum liegt ein Gasgemisch mit hohem Anteil an einer gasförmigen Siliciumverbindung, bevorzugt 20 bis 80 Mol-%, besonders bevorzugt 30 bis 50 Mol-% in Wasserstoff vor.

In der Summe aller Gasmengen beinhaltet die Gaszusammensetzung im Reaktorquerschnitt vorzugsweise 15 bis 60 Mol-% gasförmige Siliciumverbindung und 40 bis 85 Mol-% Wasserstoff, bevorzugt 20 bis 50 Mol-% gasförmigen Siliciumverbindung und 50 bis 80 Mol-% Wasserstoff.

Das erfindungsgemäße Verfahren wird bevorzugt im Bereich von 1 bis 20 bar absolut, besonders bevorzugt im Bereich von 1 bis 6 bar absolut ausgeführt.

Die Erfindung betrifft auch eine Vorrichtung zur Durchführung des erfindungsgemäßen Verfahrens.

Diese Vorrichtung ist ein Fließbettreaktor (1) der aufweist:
a) eine drucktragende Hülle (2)
b) ein inneres Reaktorrohr (3) aus einem Material, das eine hohe Transmission für Temperaturstrahlung aufweist
c) einen Einlass (4) für Siliciumpartikel (5),
d) eine Einlassvorrichtung (6) zum Zuführen eines Reaktionsgases (7), das eine gas- oder dampfförmige Siliciumverbindung enthält,
e) eine Gasverteilungseinrichtung (8) für die Zufuhr eines Fluidisiergases (9)
f) einen Auslass (10) für nicht abreagiertes Reaktionsgas, Fluidisiergas sowie die gas- oder dampfförmigen Produkte der Reaktion (11), welche sich oberhalb der Wirbelbettoberfläche (19) sammeln,
g) einen Auslass (12) für das Produkt (13)
h) eine Heizvorrichtung (14),
i) eine Energieversorgung (15) für die Heizvorrichtung (14)
dadurch gekennzeichnet, dass im Bereich der zu schützenden Reaktoroberflächen zusätzliche Düsen (18) vorhanden sind, über die eine Gaszusammensetzung (17) enthaltend 99,5 bis 95 Mol.% Wasserstoff und 0,5 bis 5 Mol.% der gasförmigen Siliciumverbindung in den Reaktor eingebracht wird.

Vorzugsweise ist zur Reduzierung von Energieverlusten eine Isolation (16) um das innere Reaktorrohr (3) angeordnet.

Vorzugsweise ist die Heizvorrichtung (14) eine Strahlungsquelle für Temperaturstrahlung, die außerhalb des inneren Reaktorrohres (3) und ohne direkten Kontakt zu diesem ringförmig angeordnet ist.

Unter einer hohen Transmission für Temperaturstrahlung ist vorzugsweise zu verstehen, dass das Reaktorrohr eine Transmission von bevorzugt größer 80 % für die vom Heizer emittierte Temperaturstrahlung aufweist.

In einer Ausführungsform der Erfindung ist die Einlassvorrichtung (6) rohrförmig ausgebildet und das Fließbett in eine Heizzone und eine darüber liegende Reaktionszone geteilt. In dieser Ausführungsform ist die Heizvorrichtung (14) vorzugsweise derart ausgebildet, dass sie mittels Temperaturstrahlung die Siliciumteilchen in der Heizzone auf so eine Temperatur aufheizt, dass sich in der Reaktionszone die Reaktionstemperatur einstellt.

Unter "Reaktoroberfläche" und "Oberfläche des Reaktors" sind im Sinne der vorliegenden Erfindung vorzugsweise die dem Reaktionsraum zugewandte Oberfläche der Reaktorwand (die dem Reaktionsraum zugewandte Oberfläche des inneren Reaktorrohres (3) im Fließbettreaktor (1)), die dem Reaktionsraum zugewandte Oberfläche der Einlassvorrichtung und, soweit vorhanden, die dem Reaktionsraum zugewandte Oberfläche der Einbauten in den Reaktor zu verstehen. Bei den Einbauten handelt es sich um bei Wirbelschichtreaktoren übliche Einbauten, wie Strömungsbrecher oder Gasblasenzerstörer-Einbauten, wie zum Beispiel Lochböden oder Zick-Zack-Körper.

Vorzugsweise wird die Reaktoroberfläche zusätzlich zur üblichen Wirbelschichtheizung beheizt. Dies kann z. B. durch elektrische Heizschlangen in der Oberfläche der Einlassvorrichtung oder durch eine verstärkte Strahlungsbeheizung der Reaktorwand erfolgen.

Die lokale Konzentrationseinstellung der Gaszusammensetzung im Reaktor kann durch weitere Düsen, Lanzen oder Einbauten erleichtert werden, wie sie beispielhaft in den Figuren dargestellt sind.

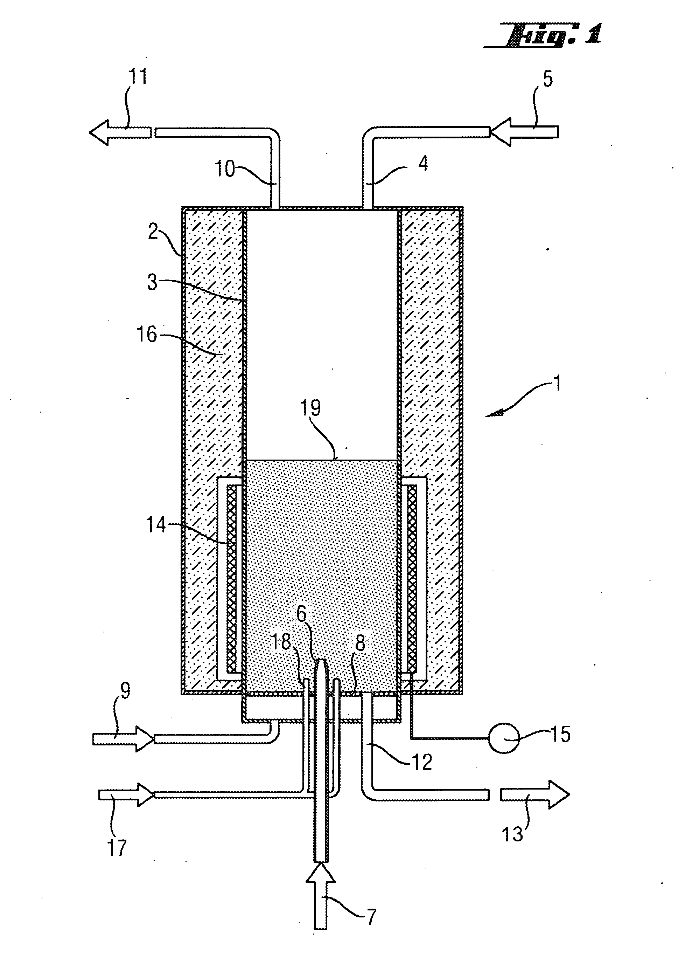

Fig. 1 zeigt schematisch im Längsschnitt eine Ausführungsform eines erfindungsgemäßen Reaktors, bei dem das Gasgemisch mit hohem Anteil an einer gasförmigen Siliciumverbindung in Wasserstoff (7) durch eine zentrale Einlassvorrichtung (6) in Form einer Düse in den Reaktor eingebracht wird und durch umliegende Düsen (18) ein Gasgemisch mit einem Anteil von 99,5 bis 95 Mol.% Wasserstoff und 0,5 bis 5 Mol.-% der gasförmigen Siliciumverbindung (17) in den Reaktor (1) eingebracht wird.

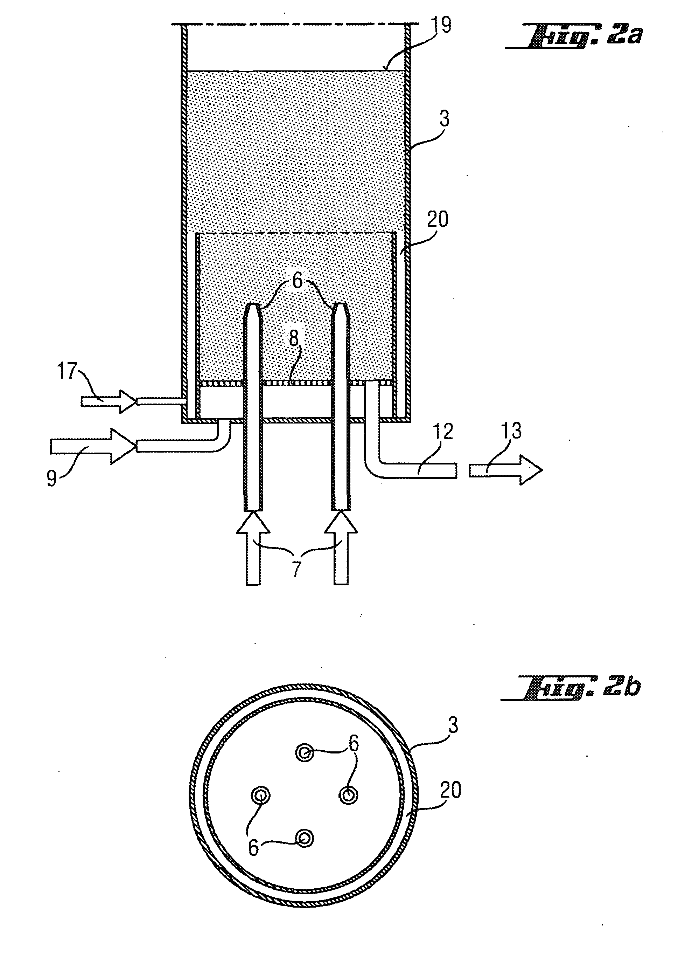

Fig. 2a und 2b zeigen schematisch im Längs- und Querschnitt eine Ausführungsform eines erfindungsgemäßen Reaktors, die eine zentrale Einlassvorrichtung in Form mehrerer zentraler Düsen (6) zum Zuführen des Reaktionsgases, das eine gas- oder dampfförmige Siliciumverbindung in Wasserstoff enthält, und einen Ringspalt (20) besitzt, durch den die Gaszusammensetzung enthaltend 99,5 bis 95 Mol.% Wasserstoff und 0,5 bis 5 Mol.% der gasförmigen Siliciumverbindung in das innere Reaktorrohr (3) eingebracht wird.

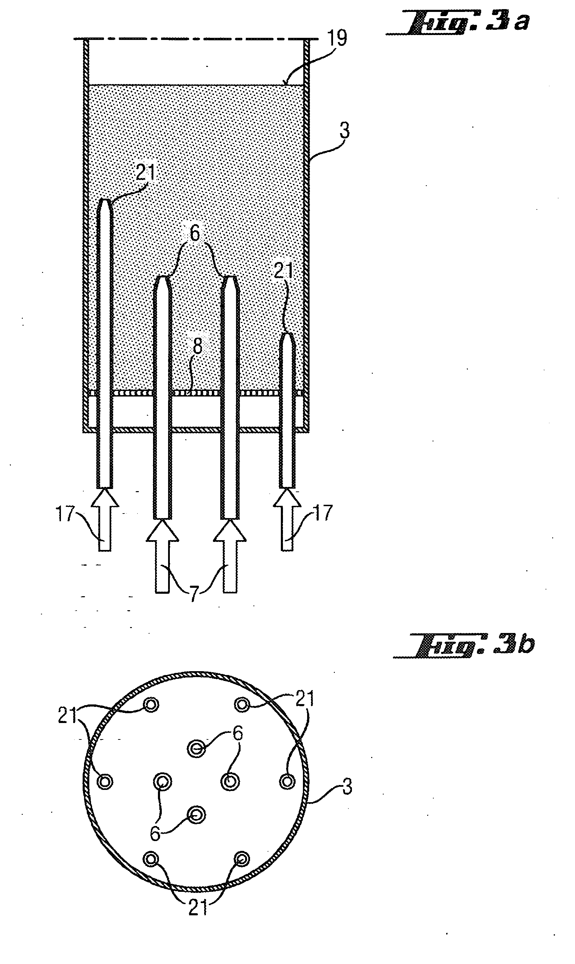

Fig. 3a und 3b zeigen schematisch im Längs- und Querschnitt eine Ausführungsform eines erfindungsgemäßen Reaktors, die als zentrale Einlassvorrichtung mehrere zentrale Düsen (6) zum Zuführen des Reaktionsgases, das eine gas- oder dampfförmige Siliciumverbindung in Wasserstoff enthält, und mehrere kurze oder lange Bodendüsen (21) besitzt, durch die die Gaszusammensetzung enthaltend 99,5 bis 95 Mol.% Wasserstoff und 0,5 bis 5 Mol.% der gasförmigen Siliciumverbindung in das innere Reaktorrohr (3) eingebracht wird.

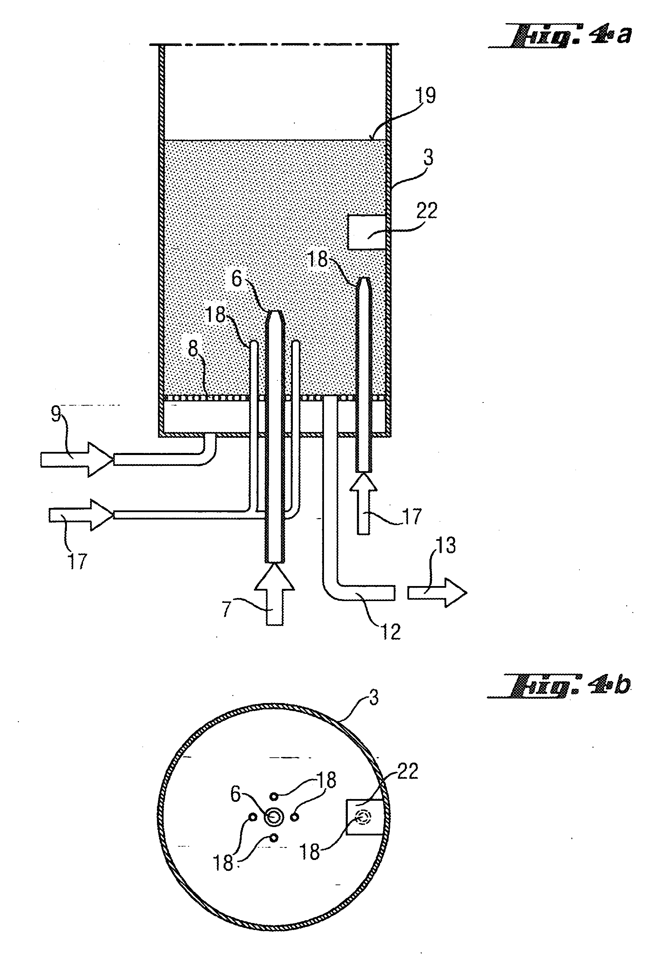

Fig. 4a und 4b zeigen schematisch im Längs- und Querschnitt eine Ausführungsform eines erfindungsgemäßen Reaktors, bei der zum Schutz vor Siliciumabscheidung an Einbauten (22) und der zentralen Düse (6), durch die das Gasgemisch mit hohem Anteil an einer gasförmigen Siliciumverbindung in das innere Reaktorrohr (3) eingebracht wird, zusätzliche Düsen (18) in der Nähe der Einbauten (22) und der zentralen Düse (6) vorhanden sind, durch die die Gaszusammensetzung enthaltend 99,5 bis 95 Mol.% Wasserstoff und 0,5 bis 5 Mol.% der gasförmigen Siliciumverbindung in das innere Reaktorrohr (3) eingebracht wird.

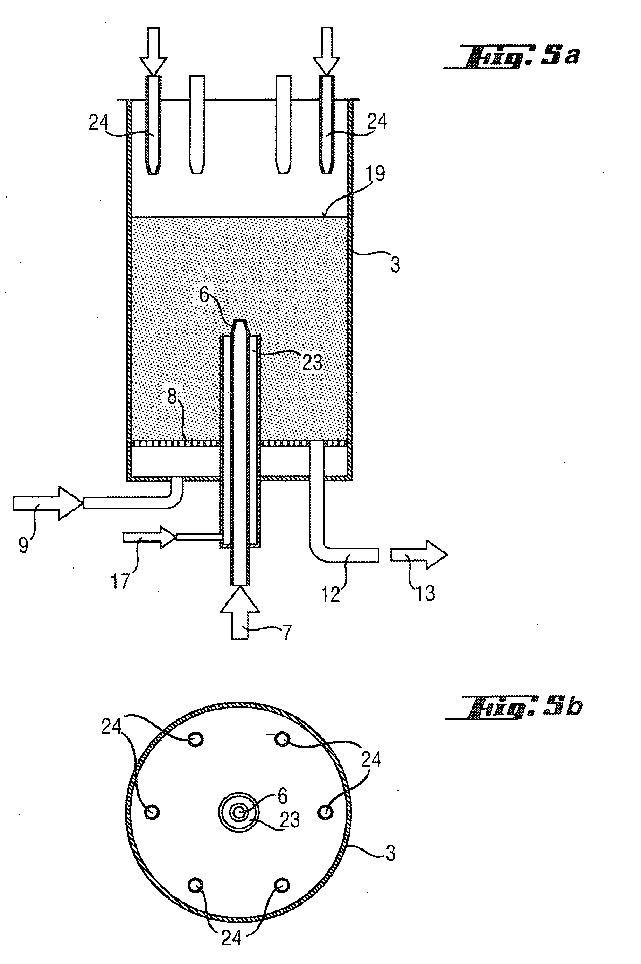

Fig. 5a und 5b zeigen schematisch im Längs- und Querschnitt eine Ausführungsform eines erfindungsgemäßen Reaktors, bei der eine Ringspaltdüse (23) zum Schutz der Oberfläche der zentralen Düse (6) und Reaktorkopfdüsen (24) zum Schutz der Oberfläche der des inneren Reaktorrohres (3) vorhanden sind, wobei durch die Ringspaltdüse (23) und die Reaktorkopfdüsen (24) die Gaszusammensetzung enthaltend 99,5 bis 95 Mol.% Wasserstoff und 0,5 bis 5 Mol.% der gasförmigen Siliciumverbindung in das innerer Reaktorrohr (3) eingebracht wird.

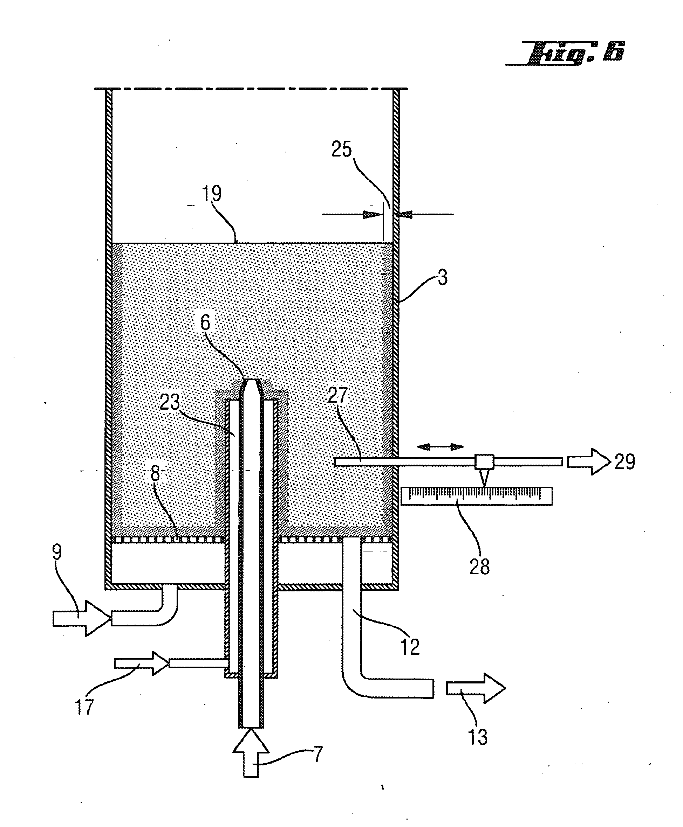

Fig. 6 zeigt schematisch die Messung des Abfalls der Reaktionsgaskonzentration in einem erfindungsgemäßen Reaktor. Ein Probenabsaugrohr (27) mit 6 mm Durchmesser das außerhalb des Reaktors mit einer Skalierung (28) versehen war wurde dazu radial durch das innere Reaktorrohr (3) unterschiedlich tief in den Reaktor eingesteckt. Dadurch ist die.Messung des radialen Konzentrationsverlaufs in einer bestimmten Reaktorhöhe möglich. Um Aussagen über den axialen Konzentrationsverlauf im Reaktor zu erhalten wurden mehrere Bohrungen zur Einführung des Probenabsaugrohres in unterschiedlichen Reaktorhöhen angebracht und die gleichen Messungen durchgeführt (nicht dargestellt). Die analytische Durchführung der Gaskonzentrationsmessung erfolgt in einem Gaschromatographen (29) mit Kapillarsäule (OV1-Säule). Die Trennung der einzelnen Gaskomponenten erfolgt dabei durch multiplikative Verteilung zwischen einer gasförmigen "mobilen" und einer flüssigen "stationären" Phase. Der Nachweis der getrennten Komponenten im Eluat erfolgt mit einem Wärmeleitfähigkeitsdetektor. Der Abfall der Reaktionsgaskonzentration auf 20 bis 80 Mol-% erfolgt in unmittelbarer Nähe zu allen inneren Reaktorrohroberflächen und allen Einbauten wie Düsen usw innerhalb des Reaktors. Der Konzentrationsabfall erfolgt in einem s-förmigen Verlauf innerhalb der ersten sechs Partikellagen, d.h. bei einem mittleren Partikeldurchmesser von 0,75 mm in einer Grenzschicht von 4,5 mm. Die als Grenzwert gemessene Konzentration von 0,5 bis 5 % in einem Wandabstand von 0 mm (25). Weitere Messungen erfolgen in Abständen von 1, 2, 3, 4, 5 mm usw.. Bei Messungen in einem Abstand größer gleich 5 mm (25) befindet man sich im Reaktionsraum (26) mit einer Reaktionsgaskonzentration von 20 bis 80 Mol-%.

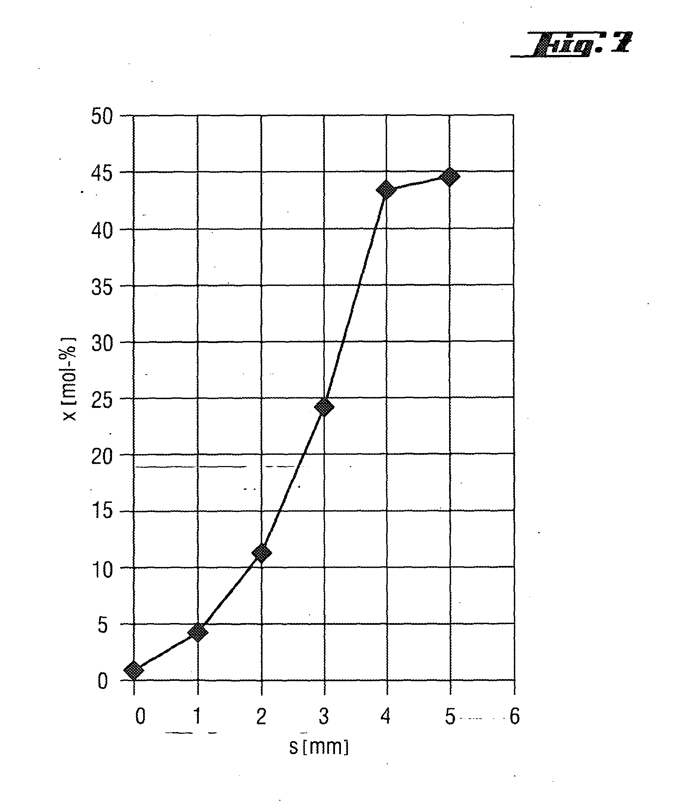

Fig. 7 zeigt den s-förmigen Verlauf des Konzentrationsabfalls innerhalb der ersten sechs Partikellagen wie in Fig. 6 beschrieben.

Die folgenden Beispiele dienen der weiteren Beschreibung der Erfindung:

### Beispiel 1:

In einem druckfesten Stahlbehälter mit einem Innendurchmesser von 770 mm befindet sich das innere Reaktorrohr, ein Quarzrohr von 600 mm Innendurchmesser und 2200 mm Länge. Am unteren Ende des Quarzrohres bildet eine mit Öffnungen versehene Platte aus Quarz den Gasverteiler für das Fluidisiergas. In einem Zentrumskreis angeordnet mit einem Durchmesser von 250 mm ragen aus der Gasverteilerplatte in das innere Reaktorrohr 4 weitere Quarzrohre mit 20 mm Innendurchmesser und 250 mm Länge als Einlassvorrichtung für die Zufuhr des siliciumhaltigen Gases bzw. Gasgemisches. Weiterhin ist die Quarzplatte mit zwei Öffnungen zur Entnahme von Produkt versehen.

Zur Energieeinbringung in den Reaktor mittels Temperaturstrahlung ist ein Strahlungsheizer vorhanden. Dabei handelte es sich um ringförmig miteinander verbundene Platten aus Graphit, die das innere Reaktorrohr umfassen, ohne dieses zu berühren. Der Strahlungsheizer wurde über eine regelbare Spannungsquelle mit elektrischer Leistung versorgt. Seine Maximalleistung betrug 200kW.

Die Startfüllung des Reaktors betrug 225 kg Siliciumgranulat mit einem mittleren Korndurchmesser von 600 µm.

Im Reaktor wurden folgende Bedingungen eingestellt:

| | |
|---|---|
| Fluidisiergas (Wasserstoff): | 290 m³/h (Normbedingungen) |
| Vorlauftemperatur Fluidisiergas | 400°C |
| Reaktionsgas Trichlorsilan | 270 kg/h |
| Betriebstemperatur: | 900°C |
| Druck im Reaktor: | 200kPa (absolut) |
| Reaktorwandtemperatur | 910°C |
| Düsenwandtemperatur | 910°C |
| Heizleistung: | 190 kW |

An der Innenseite des Reaktorrohres und an der Außenseite der Reaktionsgasdüsen wurde mit Hilfe einer Gaschromatographmessung bei der genannten Parametereinstellung eine Reaktionsgaskonzentration von 0,1 Mol.% Trichlorsilan in Wasserstoff gemessen. Das Fließbett wurde mit ca. 1,5-facher Lockerungsgeschwindigkeit u_{mf} 700 Stunden lang betrieben. Die Korngrößenanalyse der danach abgezogenen Partikel ergab einen mittleren Korndurchmesser von 665 µm. Die Inneriseite des Reaktorrohres und die Außenseite der Reaktionsgasdüsen waren nach 700 Stunden mit lokalen Silicium-Ablagerungen versehen. Die größte Stärke der Ablagerung an der Wand betrug 0,8 mm. Die größte Stärke der Ablagerung an den Düsen betrug 0,9 mm.

### Beispiel 2 bis 9:

Analog Beispiel 1 wurden bei ansonsten gleich bleibenden Bedingungen die Parameter Betriebstemperatur, Düsenwandtemperatur, Reaktorwandtemperatur und die Reaktionsgaskonzentrationen an der Wand bzw. an der Düse variiert und die maximale Abscheidung/h an der Wand bzw. an der Einlassvorrichtung bestimmt. Tab. 1 nennt die variierten Bedingungen sowie die maximale Abscheidung von Silicium an der Wand. Tab. 2 nennt die variierten Bedingungen sowie die maximale Abscheidung von Silicium an der Einlassvorrichtung.

**Tab. 1 Variation der Betriebsparameter und Siliciumabscheidung an der Reaktorwand bei einem Reaktordruck von 2 bar absolut**

| Beispiel | Betriebstemperatur (°C) | Reaktorwandtemperatur (°C) | Reaktionsgaskonzentration lokal an der Wand (Mol %) | Wandabscheidung (µm/h) |
|---|---|---|---|---|
| 1 (V) | 900 | 910 | 0,1 | 0,8 |
| 2 | 900 | 910 | 5 | 0,02 |
| 3 (V) | 900 | 800 | 0,1 | 2,0 |
| 4 (V) | 900 | 800 | 5 | 1,1 |
| 5 (V) | 1000 | 1010 | 0,1 | 1,0 |
| 6 | 1000 | 1010 | 5 | 0,01 |
| 7 (V) | 1000 | 900 | 0,1 | 2,5 |
| 8 (V) | 1000 | 900 | 5 | 1,2 |
| 9 | 950 | 950 | 2 | 0, 02 |

**Tab. 2 Variation der Betriebsparameter und Siliciumabscheidung an der Düse bei einem Reaktordruck von 2 bar absolut**

| Beispiel | Betriebstemperatur (°C) | Düsenwandtemperatur (°C) | Reaktionsgaskonzentration lokal an der Düse (Mol %) | Düsenabscheidung (µm/h) |
|---|---|---|---|---|
| 1 (V) | 900 | 910 | 0,1 | 0,9 |
| 2 | 900 | 910 | 5 | 0,01 |
| 3 (V) | 900 | 800 | 0,1 | 2,1 |
| 4 (V) | 900 | 800 | 5 | 1,0 |
| 5 (V) | 1000 | 1010 | 0,1 | 0,8 |
| 6 | 1000 | 1010 | 5 | 0,01 |
| 7 (V) | 1000 | 900 | 0 | 2,3 |
| 8 (V) | 1000 | 900 | 5 | 1,0 |
| 9 | 950 | 950 | 2 | 0,01 |

Die nicht erfindungsgemäßen Beispiele 3, 4, 7 und 8 (Vergleichsbeispiele) zeigen, dass sich bei einer Reaktorwandtemperatur, die niedriger ist, als die Betriebstemperatur, die lokale Abscheidung von Silicium erhöht. Die nicht erfindungsgemäßen Beispiele 1, 3, 5 und 7 zeigen ferner, dass überraschenderweise bei Reaktionsgaskonzentrationen unter 0,5 % die Wandabscheidung zunimmt. Gleiches gilt für den Düsenwandbelag.

### Beispiel 10 bis 16:

In den Reaktor gemäß Beispiel 1 wurden folgende Einbauteile eingebracht:

### Beispiel 10, 11 und 12:

Einbau zusätzlicher Düsen, wie in Fig. 5 als (24) dargestellt. Durch die zusätzlichen Düsen mit einem Querschnittsdurchmesser von 3 mm wurde ein Durchsatz von 10 Nm³ einer Gaszusammensetzung enthaltend 99,9 bis 95 Mol.% Wasserstoff und 0,1 bis 5 Mol.% Trichlorsilan pro Düse gefahren.

### Beispiel 13, 14 und 15:

Einbau von mit Gas durchströmten Ringspalten wie in Fig. 2 (20) und Fig. 5 (23) dargestellt. Durch die Ringspalte mit einem Querschnittsdurchmesser von 2 mm wurde eine Strömungsgeschwindigkeit von 2 m/s einer Gaszusammensetzung enthaltend 99,9 bis 95 Mol.% Wasserstoff und 0,1 bis 5 Mol.% Trichlorsilan eingestellt.

### Beispiel 16:

Einbau von mit Gas durchströmten Ringspalten, wie in Fig. 2 (20) und Fig. 5 (23) dargestellt. Durch die Ringspalte mit einem Querschnittsdurchmesser von 2 mm wurde eine Strömungsgeschwindigkeit von 2 m/s einer Gaszusammensetzung enthaltend 98 Mol.% Wasserstoff und 2 Mol.% Trichlorsilan eingestellt. Die Betriebstemperatur der Wirbelschicht und die Temperatur der Einbauteile wurden auf 950°C eingestellt.

Analog Beispiel 1 wurden bei ansonsten gleich bleibenden Bedingungen die Parameter Betriebstemperatur, Temperatur der Einbauteile und die Reaktionsgaskonzentrationen an den Einbauteilen variiert. Tab. 3 nennt die variierten Bedingungen sowie die maximale Abscheidung an den Einbauteilen. Die nicht erfindungsgemäßen Beispiele 12 und 13 belegen, dass überraschenderweise bei Reaktionsgaskonzentrationen unter 0,5 % die Wandabscheidung zunimmt.

**Tab. 3 Variation der Betriebsparameter und Siliciumabscheidung an Einbauteilen bei einem Reaktordruck von 1bar absolut**

| Beispiel | Betriebstemperatur (°C) | Temperatur Einbauteile (°C) | Reaktionsgaskonzentration lokal an Einbauteilen (Mol %) | Abscheidung Einbauteile (µm/h) |
|---|---|---|---|---|
| 10 | 700 | 700 | 5 | 0,05 |
| 11 | 700 | 700 | 2 | 0,02 |
| 12 (V) | 700 | 700 | 0,1 | 0,8 |
| 13 (V) | 1200 | 1200 | 0,1 | 1,0 |
| 14 | 1200 | 1200 | 2 | 0,01 |
| 15 | 1200 | 1200 | 5 | 0,04 |
| 16 | 950 | 950 | 2 | 0,01 |

## Patentansprüche

1. Verfahren zur Herstellung von granulatförmigem polykristallinem Silicium bei dem in einem Wirbelschichtreaktor mit einer heißen Oberfläche ein Reaktionsgas enthaltend eine gasförmige Siliciumverbindung bei einer Reaktionstemperatur von 600 bis 1100°C als Siliciummetall auf Siliciumpartikeln, die mittels eines Fluidisierungsgases zu einer Wirbelschicht fluidisiert sind, abgeschieden wird und die mit dem abgelagerten Silicium versehenen Partikel sowie nicht reagiertes Reaktionsgas und Fluidisierungsgas aus dem Reaktor entfernt werden, wobei an der Oberfläche des Reaktors eine Gaszusammensetzung enthaltend 99,5 bis 95 Mol.% Wasserstoff und 0,5 bis 5 Mol.% der gasförmigen Siliciumverbindung vorliegt und die Oberfläche des Reaktors eine Temperatur von 700 bis 1400°C aufweist und diese Temperatur höher liegt als die Temperatur der Siliciumpartikel.

2. Verfahren nach Anspruch 1, **dadurch gekennzeichnet, dass** es kontinuierlich durchgeführt wird.

3. Verfahren nach Anspruch 1 oder 2, **dadurch gekennzeichnet, dass** an der Oberfläche des Reaktors eine Gaszusammensetzung enthaltend 97 bis 99 Mol.% Wasserstoff und 1 bis 3 Mol.% der gasförmigen Siliciumverbindung vorliegt.

4. Verfahren nach einem der Ansprüche 1 bis 3, **dadurch gekennzeichnet, dass** die Temperatur an der Oberfläche des Reaktors 800 bis 1100°C beträgt.

5. Verfahren nach einem der Ansprüche 1 bis 4, **dadurch gekennzeichnet, dass** das Fluidisiergas, Wasserstoff ist.

6. Verfahren nach einem der Ansprüche 1 bis 5, **dadurch gekennzeichnet, dass** das Reaktionsgas eine gasförmige Siliciumverbindung, vorzugsweise ein Monosilan oder eine Chlorsilanverbindung, besonders bevorzugt Trichlorsilan, enthält.

## Claims

1. Method for the production of granulated polycrystalline silicon in which a reaction gas containing a gaseous silicon compound is deposited in a fluidized bed reactor with a hot surface at a reaction temperature of from 600 to 1100°C as silicon metal on silicon particles, which are fluidized by means of a fluidizing gas to form a fluidized bed, and the particles provided with the deposited silicon are removed from the reactor together with unreacted reaction gas and fluidizing gas, wherein a gas composition containing from 99.5 to 95 mol.% of hydrogen and from 0.5 to 5 mol.% of the gaseous silicon compound is present on the surface of the reactor and the surface of the reactor is at a temperature of from 700 to 1400°C and this temperature is higher than the temperature of the silicon particles.

2. Method according to Claim 1, **characterized in that** it is carried out continuously.

3. Method according to Claim 1 or 2, **characterized in that** a gas composition containing from 97 to 99 mol.% of hydrogen and from 1 to 3 mol.% of the gaseous silicon compound is present on the surface of the reactor.

4. Method according to one of Claims 1 to 3, **characterized in that** the temperature on the surface of the reactor is from 800 to 1100°C.

5. Method according to one of Claims 1 to 4, **characterized in that** the fluidizing gas is hydrogen.

6. Method according to one of Claims 1 to 5, **characterized in that** the reaction gas contains a gaseous silicon compound, preferably a monosilane or a chlorosilane compound, particularly preferably trichlorosilane.

## Revendications

1. Procédé pour la production de silicium polycristallin sous forme de granulé, dans lequel un gaz de réaction contenant un composé de silicium gazeux est séparé avec dépôt dans un réacteur à lit tourbillonnaire présentant une surface chaude, à une température de réaction de 600 à 1 100 °C, sous forme de silicium métallique sur des particules de silicium qui sont fluidisées en une couche tourbillonnaire au moyen d'un gaz de fluidisation et les particules munies de silicium déposé ainsi que le gaz de réaction n'ayant pas réagi et le gaz de fluidisation sont évacués du réacteur, une composition de gaz contenant 99,5 à 95 % en moles d'hydrogène et 0,5 à 5 % en moles du composé de silicium gazeux étant présente à la surface du réacteur et la surface du réacteur présentant une température de 700 à 1 400 °C et cette température étant plus élevée que la température des particules de silicium.

2. Procédé selon la revendication 1, **caractérisé en ce qu'**il est effectué en continu.

3. Procédé selon la revendication 1 ou 2, **caractérisé en ce qu'**à la surface du réacteur est présente une composition de gaz contenant 97 à 99 % en moles d'hydrogène et 1 à 3 % en moles du composé de silicium gazeux.

4. Procédé selon l'une quelconque des revendications 1 à 3, **caractérisé en ce que** la température à la surface du réacteur vaut de 800 à 1 100 °C.

5. Procédé selon l'une quelconque des revendications 1 à 4, **caractérisé en ce que** le gaz de fluidisation est de l'hydrogène.

6. Procédé selon l'une quelconque des revendications 1 à 5, **caractérisé en ce que** le gaz de réaction est un composé de silicium gazeux, de préférence un monosilane ou un composé chlorosilane, de façon particulièrement préférée du trichlorosilane.
